# EUROPÄISCHE PATENTSCHRIFT

(11) **EP 1 889 737 B1**
(45) Veröffentlichungstag und Bekanntmachung des Hinweises auf die Patenterteilung: **13.03.2013**
(21) Anmeldenummer: 07016115.3
(22) Anmeldetag: 16.08.2007
(51) Int. Cl.: B60C 29/00, F16K 15/20

(54) **Ventileinsatz und Ventil für einen Fahrzeugreifen**
Valve insert and valve for a vehicle tyre
Garniture de soupape et soupape pour roues de véhicule

(30) Priorität: 17.08.2006 DE 202006012729 U
(43) Veröffentlichungstag der Anmeldung: 20.02.2008
(73) Patentinhaber: Alligator Ventilfabrik GmbH, 89537 Giengen (DE)
(72) Erfinder: Seidl, Josef, 89428 Syrgenstein (DE); Häussler, Gerd, 89537 Giengen (DE); Palaoro, Renato, 89518 Heidenheim (DE)
(74) Vertreter: Nüsse, Stephan

(56) Entgegenhaltungen:
- DE-A1- 3 624 503
- DE-C- 829 099
- US-A- 2 236 587
- US-A- 4 462 449

## Beschreibung

Die Erfindung betrifft einen Ventileinsatz und ein entsprechendes Ventil für einen Fahrzeugreifen od.dgl. Element, mit einer mantelartigen Wandung eines Ventilgehäuses, das einen Sockelabschnitt zur Verbindung mit einem Luftschlauch od.dgl. Anschlusselement aufweist und andernends axial von einem Ventileinsatz überragt ist, der einen axialen Rohrraum sowie einen ihn umfangenden Dichtungsring enthält.

Ein Ventil der beschriebenen Art -- insbesondere ein Fahrradschlauchventil -- ist der deutschen Patentschrift 829 099 der Anmelderin zu entnehmen. Bei diesem Ventil ragt axial von einem -- mit einem äußeren elastischen Dichtungsring versehenen -- Ventileinsatz eine mit Luftdurchtrittslöchern ausgestattete Kammer als Führungselement für einen darin axial und relativ zu einem kugelig oder kegelig gestalteten Ventilsitz bewegbaren Ventilkörper ab. Dieser Ventilkörper enthält oberhalb eines Gummiringes einen kleinen Stift, dessen Ende zugespitzt sein kann, und der bei geschlossenem Ventil in den axialen Innenraum des Ventileinsatzes eingreift; dabei liegt dessen elastischer Dichtungsring dem Ventilsitz an.

Die Schrift zu DE 85 16 229 U1 der Anmelderin offenbart ein Ventil mit einem mantelartigen Körper aus begrenzt elastischem Kunststoff einer Härte im Auslieferungszustand von etwa 65 bis 75 Shore A, der einen Sockelabschnitt zur Verbindung mit einer Felge od.dgl. aufweist und einen Ventilzylinder mit Außengewinde für eine Ventilkappe umgibt. Bei diesem Ventil weist eine axiale Ausnehmung des Ventilzylinders in axialer Richtung unterschiedliche Durchmesser auf und nimmt einen Ventileinsatz auf, der gegen einen Kraftspeicher axial verschieblich lagert. Jener mantelartige Körper ist mit dem Ventilzylinder zu einem Ventilkörper vereinigt und dieser ist aus dem Kunststoff einstückig so hergestellt, dass die Härte an den Innenflächen der axialen Ausnehmung des Ventilzylinders zumindest in dem an den Ventileinsatz anschließenden Bereich höher ist als am Sockelabschnitt, beispielsweise etwa 50 Shore D. Zudem soll der Übergang zwischen dem weichen und dem härteren Bereich des Ventilkörpers stufenlos sein.

Bei einem Reifenventil für die Felge eines Luftreifens an einem Fahrzeug mit einem eine Längsbohrung enthaltenden Ventilkörper aus starrem, insbesondere metallischem Werkstoff mit einends angeordnetem Ventilfuß, der eine vom Ventilkörper radial abragende Ringschulter aufweist, ist gemäß EP 1 182 061 A2 der Anmelderin der Ventilkörper mit einer koaxialen Ventilhülse durch ein Zwischenrohr aus elastischem Werkstoff in Abstand verbunden und die Ventilhülse zur Längsachse des Reifenventils begrenzt neigbar. Die Ventilhülse soll aus starrem Werkstoff, -- insbesondere aus einem metallischen Werkstoff -- bestehen; das Zwischenrohr liegt einends einem Hohlschaft des Ventilkörpers klemmend an und umgibt andernends den in Abstand benachbarten Endbereich der Ventilhülse.

Angesichts dieser Gegebenheiten hat sich der Erfinder das Ziel gesetzt, einen Ventileinsatz und ein Ventil für Fahrzeugreifen od.dgl. Luftaufnahmeeinrichtungen so zu verbessern, dass diese für hohe Drücke problemlos eingesetzt zu werden vermögen. Insbesondere soll dennoch eine Pumparbeit weitgehend erleichtert sein. Insbesondere soll der Ventileinsatz an verschiedene Ventilgehäuse für unterschiedliche Felgen anfügbar sein.

Zur Lösung dieser Aufgabe hinsichtlich des Ventileinsatzes und des Ventils führt die Lehre der unabhängigen Ansprüche. Die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale. Bei angegebenen Benennungsbereichen sollen auch innerhalb der genannten Grenzen liegende Werte als Grenzwerte offenbart und beliebig einsetzbar sein.

Erfindungsgemäß ragt in den axialen, vorzugsweise zylindrischen, Rohrraum des Ventileinsatzes zumindest ein dessen Querschnitt vermindernder Ringwulst ein, dessen zum freien Ende des Ventilgehäuses gerichteter Wulstrand einen etwa radialen Ringabsatz bildet; diesem ist in Schubrichtung für einen Dichtkörper aus begrenzt elastischem Werkstoff ein Raumabschnitt vorgeordnet, dessen Querschnitt sich gegen die Schubrichtung, insbesondere konisch, erweitert.

Vorzugsweise bildet der Ringabsatz einen Anschlag für den kegelartig verformten Dichtkörper und verhindert ein weiteres Verkeilen dieses Dichtkegels.

Grundsätzlich wird gemäß dem Konzept der Erfindung eine Pumparbeit selbst bei vergleichsweisen hohen. Drücken weitgehend erleichtert, so dass ein Ventileinsatz bzw. ein Ventil gemäß dem Konzept der Erfindung selbst für hohe Drücke problemlos einsetzbar ist.

Vorzugsweise ist das im Ventilgehäuse angeordnete freie Ende des Ventileinsatzes -- von einer Heckwand -- zumindest teilweise überspannt. Zudem hat es sich dazu als günstig erwiesen, dass der konische Raumabschnitt des Ventileinsatzes mit einer in Abstand zugeordneten, dessen freies Ende bildenden Heckwand einen rohrraumförmigen Heckraum des Ventileinsatzes begrenzt, der mit des letzteren Rohrraum koaxial verläuft und in dem der Dichtkegel axial verschiebbar lagert.

Im Rahmen einer Weiterbildung liegt zumindest ein in der Wandung des Heckraumes vorgesehener - also seitlicherDurchbruch, dessen Rand mit der Heckwand die axiale Länge einer Lagerstelle für den endwärtigen Dichtkörper bestimmt. Letzterer weist vorteilhafterweise eine zylindrische Außenfläche auf und lagert im Heckraum axial verschiebbar; beim teilweisen Einführen des Dichtkörpers in Schubrichtung in den konischen. Raumabschnitt des Ventileinsatzes wird er in Anpassung an dessen Wandungsfläche teilweise zu einem Dichtkegel verformt. In Endstellung des Dichtkegels liegt dessen heckferne Stirnfläche dem Ringabsatz an. Der Dichtkegel dichtet Heckkraum und Ringraum des Ventileinsatzes gegeneinander ab.

Nach einem weiteren Merkmal einer Weiterbildung der Erfindung ist dem am Ende des Rohrraumes angeordneten Ringwulst des Ventileinsatzes an dessen Außenfläche ein diese radial überragender Dichtungsring aus flexiblem Werkstoff zugeordnet. Dieser Dichtungsring flachen Querschnitts lagert in einer äußeren Ringnut des Ventileinsatzes, und dem Boden der Ringnut ist ein von ihm aufragender Ringwulst bevorzugt teilkreisförmigen Querschnittes zur Verbesserung des Sitzes des Dichtungsringes angeformt.

Auch liegt es im Rahmen einer Weiterbildung der Erfindung, dem Dichtungsring in Schubrichtung ein Außengewinde des Ventileinsatzes und diesem Außengewinde einen weiteren Dichtungsring nachzuordnen, der sich in Schubrichtung an einem Außenring des Ventileinsatzes abstützt; dieser weitere Dichtungsring ist bevorzugt von etwa quadratischem Querschnitt, dessen Wandbreite etwa der Breite einer als Lagerfläche dienenden äußeren Ringfläche des Ventileinsatzes entspricht. Zudem sollen die Ringfläche und der Außenring des Ventileinsatzes eine rechtwinkelige Lagerbegrenzung für diesen Dichtungsring bilden, der in Gebrauchslage den Außenring vorteilhafterweise radial überragt.

Dieser Dichtungsring erlaubt ein Abdichten des Ventils durch den erfindungsgemäßen Ventileinsatz bei dessen Einsatz in PKW- oder in Fahrrad-Ventilkörpern; den Ventileinsatz umgibt ein solcher PKW-Ventilkörper oder ein Fahrradventilkörper abschnittsweise und hintergreift mit einem querschnittlich teilrinnenartigen oder winkelförmigen Ringkragen eines Schraubringes den Außenring des Ventileinsatzes.

Auch ist es möglich, den erfindungsgemäßen Ventileinsatz für sog. Sclaverandventilkörper zu verwenden, die dann den jeweiligen Ventilkörper so umgeben, dass deren Endkante unterhalb des am Außenring des Ventileinsatzes angeordneten Dichtungsringes verläuft.

Dank dem erfindungsgemäßen Konzept und/oder der weiteren Ausgestaltungen kann der Ventileinsatz für höhere Drücke und auf nahezu allen bekannten Ventilfüßen von Fahrradschläuchen -- auch für unterschiedliche Felgen und Ventiltypen -- Verwendung finden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: eine vergrößerte Schrägsicht auf eine bevorzugte Ausführungsform eines Ventileinsatzes;
- Fig. 2:: eine Seitenansicht des Ventileinsatzes von Fig. 1 mit axial geschnittenem Endabschnitt;
- Fig. 3:: eine Draufsicht auf den Ventileinsatz der Fig. 1 mit einer Schnittlinie IV-V zur Klarstellung der Fig. 4 und Fig. 5;
- Fig. 4, Fig. 5:: jeweils eine Seitenansicht des an der Linie IV-V der Fig. 3 hälftig geschnittenen Ventileinsatzes in unterschiedlichen Betriebsstellungen;
- Fig. 6:: eine teilweise geschnittene Seitenansicht eines Ventilkörpers zum Einsatz bei einem PKW-Reifen, mit dem eingebauten Ventileinsatz der Fig. 1 bis Fig. 5;
- Fig. 7:: eine teilweise geschnittene Seitenansicht eines Ventilkörpers zum Einsatz bei einem Fahrrad-Reifen, mit dem eingebauten Ventileinsatz der Fig. 1 bis Fig. 5;
- Fig. 8:: eine teilweise geschnittene Seitenansicht eines sog. Sclaverand-Ventilkörpers mit dem eingebauten Ventileinsatz der Fig. 1 bis Fig. 5.

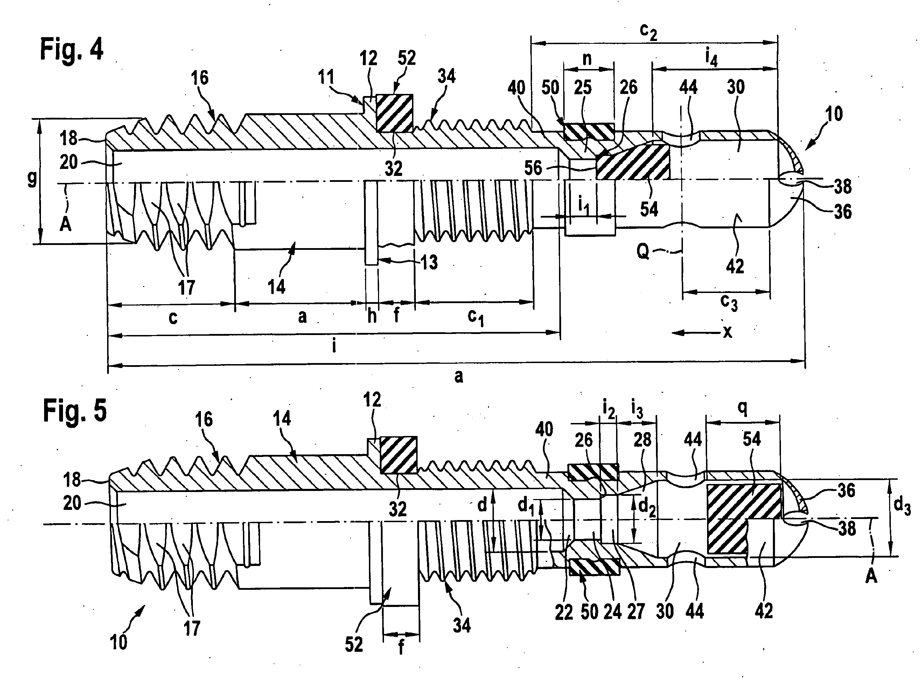

Ein Ventileinsatz 10 einer axialen Länge a weist an einer Stirnfläche 11 eines in einer Querebene zu seiner Längsachse A angeformten Außenringes 12 des Durchmessers e und einer geringen axialen Dicke b einen axialen Rohransatz auf, in den -- nach einem zylindrischen Rohrbereich 14 axialer Länge a₁ sowie eines Außendurchmessers e₁ etwa gleichen Maßes -- endwärts in einer Länge c ein Außengewinde 16 eingeformt ist. Dieses ist an zwei einander gegenüberliegenden Längsflanken unter Bildung linsenartiger Flächen 17 achswärts eingeformt und bietet an seinem freien Ende eine ringartige Front- oder Firstkante 18 an. Zu dieser hin vermindert sich der Gewindedurchmesser g in Achsrichtung trichterartig, wie u.a. Fig. 4 erkennen lässt.

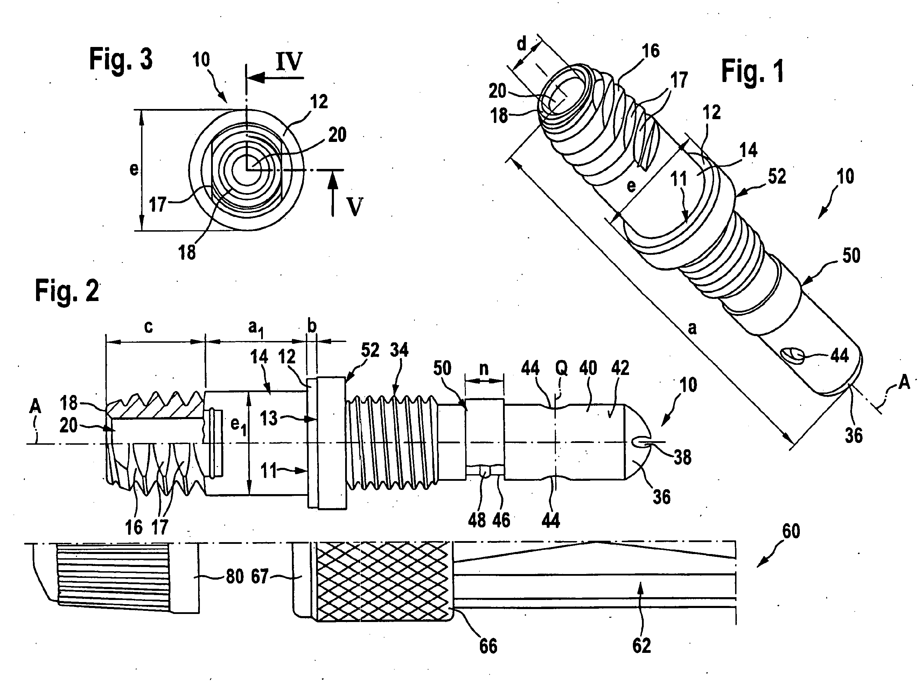

In den Fig. 1 bis 3 ist ein von der Frontkante 18 als Mündungskante ausgehender Rohrraum 20 des Durchmessers d nur abschnittsweise zu erkennen. Dass dieser Rohrraum 20 axial einen in Abstand f zur Heckfläche 13 des Außenringes 12 angeordneten Rohrabschnitt mit Außengewinde 34 der Länge c₁ durchgreift sowie in einen mit achswärts geneigter Wandung sich längsschnittlich verjüngenden streifenartig schmalen Zwischenraum 22 übergeht, zeigen die Fig. 4, 5. Letzterer schließt anderseits an einen Ringraum 24 axialer Länge i₁ sowie geringen Durchmessers d₁ an, der von einem Ringwulst 25 umgrenzt wird sowie -- unter Bildung eines Ringabsatzes bzw. einer radialen Ringstufe 26 der Breite i₂ -- in einen nachgeschalteten schmalen Spaltraum 27 größeren Durchmessers d₂ übergeht. Diesem folgt ein sich davon trichterähnlich erweiternder Raumabschnitt 28 der Länge i₃. Der anschließende rohrraumförmige Heckraum 30 der Länge i₄ hat einen inneren Durchmesser d₃ und geht endwärts in eine teilkalottenförmige bzw. haubenartige Heckwand 36 über. In deren Zenit verläuft ein erster Querschlitz 38 und ein weiterer quer, hier rechtwinklig, dazu orientierter Querschlitz, welches die Längsachse A durchsetzt. Die beschriebenen Rohrraumabschnitte -- nämlich der Zwischenraum 22, der Ringraum 24, der Spaltraum 27 sowie der Heckraum 30 -- sind in einem Rohrabschnitt 40 des Ventileinsatzes 10 angeordnet, der sich vom Außengewinde 34 bis zum Ansatz der Heckwand 36 erstreckt.

Der oben erwähnte Abstand zwischen Außenring 12 und Außengewinde 34 bestimmt eine Ringfläche 32 der Breite f, die in Fig. 4, 5 verdeutlicht ist. Der an jenes Außengewinde 34 anschließende Stab- oder Rohrabschnitt 40 der Länge c₂ bietet eine zylindrische Außenfläche 42 an. In axialem Mittenabstand c₃ von der Heckwand 36 sind im Rohrabschnitt 40 an einer gemeinsamen Querachse Q zwei Durchbrüche 44 angeordnet.

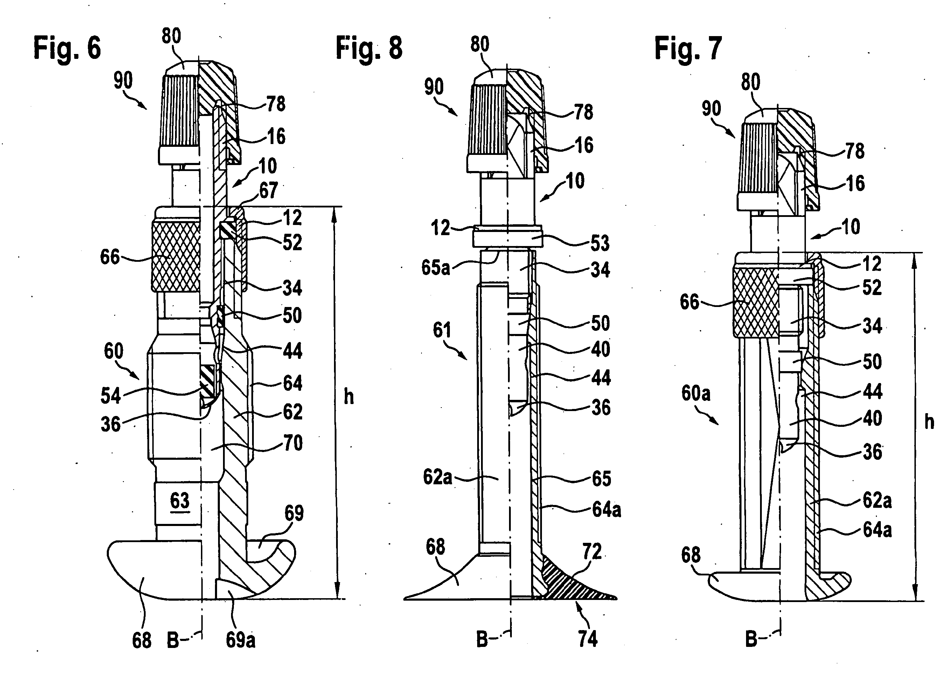

Etwa in der axialen Mitte zwischen den Durchbrüchen 44 und dem Außengewinde 34 ist in die zylindrische Außenfläche 42 des Stababschnitts 40 eine in Fig. 2 gut erkennbare Ringnut 46 rechteckigen Querschnitts der Breite n eingeformt, in deren Mitte ein angeformter Ringwulst 48 etwa teilkreisförmigen Querschnitts verläuft. Diese Ringnut 46 nimmt einen flachen Dichtring 50 jener Breite n aus flexiblem Werkstoff auf, der innenseitig jenen Ringwulst 48 aufnimmt sowie die Außenfläche 42 des Rohrabschnittes 40 geringfügig überragt. Ein weiterer Dichtungsring 52 aus flexiblem Werkstoff, der einen quadratischen Querschnitt der Seitenlänge f aufweist, sitzt der oben beschriebenen Ringfläche 32 auf und liegt der Heckfläche 13 des benachbarten Außenringes 12 an, den er radial geringfügig überragt. Dieser Dichtring 52 dient zum Abdichten in PKW- und Blitzventilkörpern, wie weiter unten zu den Fig. 6, 7 erörtert wird.

In dem sich im Bereich des Raumabschnittes 28 zum Ringwulst 25 hin verjüngenden Rohrraum 30 des Rohrabschnittes 40 ist in Fig. 4, 5 ein zylindrischer Dichtkörper 54 aus flexiblem Werkstoff zu erkennen, dessen Querschnitt dem heckwärtigen Rohrraum 30 angepasst ist und dessen Länge q etwa dem axialen Abstand der Heckwand 36 von den Rändern der Durchbrüche 44 entspricht. Dieser Dichtkörper oder Dichtkegel 54 ist in Fig. 4 in axialer Schubrichtung x in Abstand zur Heckwand 36 so verschoben, dass seine heckferne Stirnfläche 56 der Ringstufe 26 des Ringwulstes 25 anliegt; ein an diese Stirnfläche 56 anschließender Bereich des Dichtkegels 54 ist dabei etwa in halber Länge q durch Pressdruck querschnittlich verringert und liegt der Wandfläche des sich zur Ringstufe 26 hin axial trichterartig vermindernden Raumabschnittes 28 an. Der Querschnitt des Rohrraumes 30und damit der Ventileinsatz 10 -- ist also in Fig. 4 durch den dem Ringabsatz 26 anliegenden, querschnittlich teilweise verformten Dichtkegel 54 geschlossen; der Ringabsatz 26 verhindert ein weiteres Verkeilen des Dichtkegels 54 im Konus des Raumabschnittes 28. In Fig. 5 ist der Rohrraum 30 geöffnet, da hier der Dichtkegel 54 jener Heckwand 36 nahe lagert und so -- ohne Verformung -- in axialem Abstand zum Ringabsatz 26 steht.

In Fig. 2 sind der besseren Übersicht halber dem Ventileinsatz 10 andeutungsweise Teile des ihn umgebenden rohrförmigen Ventilgehäuses 60 oder Ventilkörpers 60 zugeordnet, nämlich ein Abschnitt von dessen Wandung 62, vorliegend aus begrenzt elastischem Kunststoff in einer Abwandlung ggf. aus starrem, insbesondere metallischem Werkstoff, mit -- den Außenring 12 des Ventileinsatzes 10 mittels eines Ringkragens 67 übergreifendem -- Schraubring 66 sowie mit einer Ventilkappe 80; deren in Fig. 6 bis 8 sichtbares Innengewinde 78 kämmt in Verschlussstellung mit dem endwärtigen Außengewinde 16 des Ventileinsatzes 10.

Die in Fig. 6 skizzierte Einheit eines Ventils 90 aus Ventileinsatz 10 und Ventilgehäuse 60 dient dem Einbau in einen nicht dargestellten PKW-Reifen. Die Wandung 62 umgibt einen zur Längsachse B des Ventilgehäuses koaxialen Innenraum 70 und endet mit einem tellerartigen Sockelabschnitt 68, der jene rinnenartige Ringfläche 69 bestimmt sowie eine schlitzartige, ggf. die Längsachse B umgebende ringartige, Bodennut 69ₐ enthält.

In etwa halber Länge h des Ventilgehäuses 60 ist an der Außenfläche 63 der Wandung 62 ein Außengewinde 64 zu erkennen und über diesem ein Schraubring 66, der mit seinem achswärts abkragenden Ringkragen 67 den Außenring 12 des Ventileinsatzes 10 übergreift. Letzterer überragt das Ventilgehäuse 60 axial und trägt dazu in axialem Abstand die oben erwähnte Ventilkappe 80.

Die für den Einbau in einem Fahrradreifen vorgesehene Einheit aus Ventileinsatz 10 und Ventilgehäuse 60ₐ der Fig. 7 entspricht mit ihren Teilen i.w. der Darstellung in Fig. 6. Allerdings ist das Außengewinde 64ₐ durchgehend in die Wandung 62ₐ eingeformt.

Fig. 8 zeigt einen sog. Sclaverandventilkörper 61 mit einem Tellerfuß 72, dessen Unterfläche 74 das Heck des Ventilkörpers 61 bildet. Auch hier erstreckt sich das Außengewinde 64ₐ über die gesamte Außenfläche der Wandung 65. Diese endet mit einer Endkante 65ₐ unterhalb des -- dem Außenring 12 des Ventileinsatzes 10 nahen -- oberen Dichtungsringes 52 etwa quadratischen Querschnittes.

## Patentansprüche

1. Ventileinsatz (10) zum Einsetzen in ein Ventilgehäuse (60) eines Ventils (90) für einen Fahrzeugreifen od.dgl. Element zur Verbindung mit einem Luftschlauch, derart dass das Ventilgehäuse (60) vom Ventileinsatz (10) im eingesetzten Zustand axial überragt wird und der Ventileinsatz (10) einen axialen Rohrraum (20) sowie einen ihn umfangenden Dichtungsring aufweist, wobei in den axialen Rohrraum (20) zumindest ein dessen Querschnitt vermindernder Ringwulst (25) einragt, dessen zum freien Ende (36) des Ventilgehäuses (60, 60ₐ, 61) gerichteter Wulstrand einen etwa radialen Ringabsatz (26) bildet, dem in Schubrichtung (x) für einen Dichtkörper (54) aus begrenzt elastischem Werkstoff ein Raumabschnitt (28) vorgeordnet ist, dessen Querschnitt sich gegen die Schubrichtung erweitert, **dadurch gekennzeichnet, dass** der Ventileinsatz (10) universal einsetzbar ist zum Einsetzen in einen Pkw-Ventilkörper (60) und/oder Fahrradventilkörper (60a) und/oder Sclaverandventilkörper (61), und dass einem Dichtungsring (50) in Schubrichtung (x) ein Außengewinde (34) des Ventileinsatzes (10), und diesem Außengewinde ein weiterer Dichtungsring (52) nachgeordnet ist, der sich in Schubrichtung an einem von der Außenfläche des Ventileinsatzes abragenden Außenring (12) abstützt.

2. Ventileinsatz (10) nach Anspruch 1, **dadurch gekennzeichnet**, das der axiale Rohrraum (20) zylindrisch ausgebildet ist.

3. Ventileinsatz (10) nach Anspruch 1 oder 2, **dadurch gekennzeichnet, dass** sich der Querschnitt des Raumabschnitts (28) gegen die Schubrichtung konisch erweitert.

4. Ventileinsatz (10) nach einem der Ansprüche 1 bis 3, **dadurch gekennzeichnet, dass** ein im Ventilgehäuse (60) anordnenbares freies Ende des Ventileinsatzes zumindest teilweise überspannt ist, insbesondere von einer Heckwand.

5. Ventileinsatz (10) nach einem der Ansprüche 1 bis 4, **dadurch gekennzeichnet, dass** der Ringabsatz (26) einen Anschlag für den Dichtkörper bildet.

6. Ventileinsatz (10) nach einem der Ansprüche 1 bis 5, **dadurch gekennzeichnet, dass** der konische Raumabschnitt (28) mit einer in Abstand (i₄) zugeordneten Heckwand (36) als freies Ende des Ventileinsatzes (10) einen mit dessen Rohrraum (20) koaxialen rohrraumförmigen Heckraum (30) begrenzt, in dem der Dichtkörper oder Dichtkegel (54) axial verschiebbar lagert.

7. Ventileinsatz (10) nach einem der Ansprüche 1 bis 6, **dadurch gekennzeichnet, dass** in der Wandung des Heckraumes (30) zumindest ein Durchbruch vorgesehen ist, dessen Rand mit der Heckwand (36) die axiale Länge (q) einer Lagerstelle für den Dichtkörper oder Dichtkegel (54) bestimmt.

8. Ventileinsatz (10) nach einem der Ansprüche 1 bis 7, **dadurch gekennzeichnet, dass** der eine zylindrische Außenfläche aufweisende Dichtkörper (54) im Heckraum (30) axial verschiebbar lagert und bei teilweisem Einführen in Schubrichtung (x) in den konischen Raumabschnitt (28) des Ventileinsatzes (10) in Anpassung an dessen Wandungsfläche verformbar ist.

9. Ventileinsatz (10) nach einem der Ansprüche 1 bis 8, **dadurch gekennzeichnet, dass** in Endstellung des Dichtkegels (54) dessen heckferne Stirnfläche (54) dem Ringabsatz (26) anliegt.

10. Ventileinsatz (10) nach einem der Ansprüche 1 bis 9, **dadurch gekennzeichnet, dass** dem am Ende des Rohrraumes (20) angeordneten Ringwulst (25) des Ventileinsatzes (10) an dessen Außenfläche (42) ein diese radial überragender Dichtungsring (50) aus flexiblem Werkstoff zugeordnet ist.

11. Ventileinsatz (10) nach einem der Ansprüche 1 bis 10, **gekennzeichnet durch** einen Dichtungsring (50), insbesondere flachen Querschnitts, der in einer äußeren Ringnut (46) des Ventileinsatzes (10) lagert.

12. Ventileinsatz (10) nach einem der Ansprüche 1 bis 11, **dadurch gekennzeichnet, dass** von der Bodenfläche der Ringnut (46) ein etwa mittig verlaufender Ringwulst (48) aufragt (Fig. 2).

13. Ventileinsatz (10) nach einem der Ansprüche 1 bis 12, **dadurch gekennzeichnet, dass** der Dichtungsring (50) flach ist.

14. Ventileinsatz (10) nach einem der Ansprüche 1 bis 13, **dadurch gekennzeichnet, dass** ein weiterer Dichtungsring (52) einen etwa quadratischen Querschnitt aufweist, und die Wandbreite etwa der Breite (f) einer als Lagerfläche dienenden äußeren Ringfläche (32) des Ventileinsatzes (10) entspricht.

15. Ventileinsatz (10) nach einem der Ansprüche 1 bis 14, **dadurch gekennzeichnet, dass** eine Ringfläche (32) und ein Außenring (12) des Ventileinsatzes (10) eine rechtwinkelige Lagerbegrenzung für einen weiteren Dichtungsring (52) bilden.

16. Ventileinsatz (10) nach einem der Ansprüche 1 bis 15, **dadurch gekennzeichnet, dass** ein weiterer Dichtungsring (52) einen Außenring (12) radial überragt.

17. Ventil (90) für einen Fahrzeugreifen od.dgl. Element, mit einer mantelartigen Wandung eines Ventilgehäuses (60), das einen Sockelabschnitt (68) zur Verbindung mit einem Luftschlauch od.dgl. Anschlusselement aufweist und andernends axial von einem Ventileinsatz (10) nach einem der Ansprüche 1 bis 16 überragt ist.

18. Ventil (90) nach Anspruch 17, **dadurch gekennzeichnet, dass** den Ventileinsatz (10) ein PKW-Ventilkörper (60) abschnittsweise umgibt und mit einem querschnittlich teilrinnenartigen oder winkelförmigen Ringkragen (67) eines Schraubringes (66) den Außenring (12) des Ventileinsatzes hintergreift (Fig. 6).

19. Ventil (90) nach Anspruch 17 oder 18, **dadurch gekennzeichnet, dass** den Ventileinsatz (10) ein Fahrradventilkörper (60ₐ) abschnittsweise umgibt und mit einem querschnittlich teilrinnenartigen oder winkelförmigen Ringkragen (67) den Außenring (12) des Ventileinsatzes hintergreift (Fig. 7).

20. Ventil (90) nach einem der Ansprüche 17 bis 19, **dadurch gekennzeichnet, dass** den Ventileinsatz (10) ein sog. Sclaverandventilkörper (61) abschnittsweise umgibt, dessen Endkante (65ₐ) unterhalb des am Außenring (12) des Ventileinsatzes (10) angeordneten Dichtungsringes (52) verläuft (Fig. 8).

## Claims

1. Valve insert (10) for insertion into a valve housing (60) of a valve (90) for a vehicle tyre or similar element for connection to an air tube, such that the valve insert (10) projects axially above the valve housing (60) when inserted and the valve insert (10) comprises an axial tubular chamber (20) and a sealing ring surrounding said tubular chamber, at least one torus (25) which reduces the cross-section thereof projecting into the axial tubular chamber (20), the beaded edge of which torus, oriented towards the free end (36) of the valve housing (60, 60a, 61), forms an approximately radial annular shoulder (26), upstream of which, in the direction of thrust (x) for a sealing member (54) made of material with limited resilience, a chamber portion (28) is arranged, the cross-section of which expands in the opposite direction to the direction of thrust, **characterised in that** the valve insert (10) is universally insertable for insertion into a car valve body (60) and/or bicycle valve body (60a) and/or Sclaverand valve body (61), and **in that** an external thread (34) of the valve insert (10) is arranged downstream of a sealing ring (50) in the direction of thrust (x), and a further sealing ring (52) is arranged downstream of said external thread, said sealing ring being supported in the direction of thrust on an outer ring (12) which projects from the outer face of the valve insert.

2. Valve insert (10) according to claim 1, **characterised in that** the axial tubular chamber (20) has a cylindrical configuration.

3. Valve insert (10) according to either claim 1 or claim 2, **characterised in that** the cross-section of the chamber portion (28) expands in a conical manner in the opposite direction to the direction of thrust.

4. Valve insert (10) according to any of claims 1 to 3, **characterised in that** a free end of the valve insert, which end can be arranged in the valve housing (60), is spanned, at least in part, in particular by a rear wall.

5. Valve insert (10) according to any of claims 1 to 4, **characterised in that** the annular shoulder (26) forms a stop for the sealing member.

6. Valve insert (10) according to any of claims 1 to 5, **characterised in that** the conical chamber portion (28), together with an associated rear wall (36) at a distance (i₄) as a free end of the valve insert (10), delimits a tubular-chamber-shaped rear chamber (30) which is coaxial with the tubular chamber (20) of the valve insert, in which rear chamber the sealing member or sealing cone (54) is supported in an axially displaceable manner.

7. Valve insert (10) according to any of claims 1 to 6, **characterised in that** at least one aperture is provided in the wall of the rear chamber (30), the edge of which aperture, together with the rear wall (36), determines the axial length (q) of a bearing point for the sealing member or sealing cone (54).

8. Valve insert (10) according to any of claims 1 to 7, **characterised in that** the sealing member (54) having a cylindrical outer face is supported in the rear chamber (30) in an axially displaceable manner and, when partially inserted in the direction of thrust (x), into the conical chamber portion (28) of the valve insert (10), can be deformed to adapt to the wall face thereof.

9. Valve insert (10) according to any of claims 1 to 8, **characterised in that**, in the end position of the sealing cone (54), the end face (54) thereof, remote from the rear, rests on the annular shoulder (26).

10. Valve insert (10) according to any of claims 1 to 9, **characterised in that** a sealing ring (50) made of flexible material located on from the outer face (42) of the valve insert (10) and which projects beyond said outer face, is associated with the torus (25) of the valve insert, which torus is arranged at the end of the tubular chamber (20).

11. Valve insert (10) according to any of claims 1 to 10, **characterised by** a sealing ring (50), in particular having a planar cross-section, which is supported in an outer annular groove (46) of the valve insert (10).

12. Valve insert (10) according to any of claims 1 to 11, **characterised in that** an approximately centrally extending torus (48) projects upwards from the base of the annular groove (46) (Fig. 2).

13. Valve insert (10) according to any of claims 1 to 12, **characterised in that** the sealing ring (50) is planar.

14. Valve insert (10) according to any of claims 1 to 13, **characterised in that** a further sealing ring (52) has an approximately square cross-section, and the width of the wall approximately corresponds to the width (f) of an outer annular face (32) of the valve insert (10) which serves as a bearing face.

15. Valve insert (10) according to any of claims 1 to 14, **characterised in that** an annular face (32) and an outer ring (12) of the valve insert (10) form a right-angled bearing limit for a further sealing ring (52).

16. Valve insert (10) according to any of claims 1 to 15, **characterised in that** a further sealing ring (52) projects radially above an outer ring (12).

17. Valve (90) for a vehicle tyre or similar element, comprising a shell-type wall of a valve housing (60) which comprises a socket portion (68) for connection to an air tube or similar connection element, a valve insert (10) according to any of claims 1 to 16 projecting axially above said valve housing at the other end.

18. Valve (90) according to claim 17, **characterised in that** a car valve body (60) surrounds the valve insert (10) in portions and engages behind the outer ring (12) of the valve insert by means of an annular collar (67) of a threaded ring (66), said collar having a semi-trough-like or angular cross-section (Fig. 6).

19. Valve (90) according to either claim 17 or claim 18, **characterised in that** a bicycle valve body (6a) surrounds the valve insert (10) in portions and engages behind the outer ring (12) of the valve insert by means of an annular collar (67) having a semi-trough-like or angular cross-section (Fig. 7).

20. Valve (20) according to any of claims 17 to 19, **characterised in that** what is known as a Sclaverand valve body (61) surrounds the valve insert (10) in portions, the end edge (65a) of which body extends underneath the sealing ring (52) arranged on the outer ring (12) of the valve insert (10) (Fig. 8).

## Revendications

1. Garniture de valve (10) destinée à être insérée dans un boîtier de valve (60) d'une valve (90) pour un pneumatique de véhicule ou un élément similaire pour la liaison à un tuyau flexible à air, de telle sorte que la garniture de valve (10) dépasse du boîtier de valve (60) à l'état inséré et que la garniture de valve (10) comprenne un espace tubulaire axial (20) ainsi qu'une bague d'étanchéité entourant ce dernier, et au moins un renflement annulaire (25) diminuant la section transversale de l'espace tubulaire axial (20) faisant saillie dans ce dernier, le bord de ce renflement orienté vers l'extrémité libre (36) du boîtier de valve (60, 60ₐ, 61) formant un épaulement annulaire approximativement radial (26) avant auquel, dans la direction d'insertion (x) pour un corps d'étanchéité (54) en matériau à élasticité limitée, est associée une section d'espace (28) dont la section transversale s'élargit à l'encontre de la direction d'insertion, **caractérisée en ce que** la garniture de valve (10) peut être utilisée universellement pour l'insertion dans un corps de valve de voiture automobile (60) et/ou un corps de valve de bicyclette (60a) et/ou ou un corps de valve Presta (61), et **en ce qu'**un filetage extérieur (34) de la garniture de valve (10) est situé en aval d'une bague d'étanchéité (50) dans la direction d'insertion (x) et une bague d'étanchéité supplémentaire (52) est située en aval de ce filetage extérieur, laquelle bague d'étanchéité supplémentaire s'applique, dans la direction d'insertion, contre une bague extérieure (12) dépassant de la surface extérieure de la garniture de valve.

2. Garniture de valve (10) selon la revendication 1, **caractérisée en ce que** l'espace tubulaire axial (20) est cylindrique.

3. Garniture de valve (10) selon la revendication 1 ou 2, **caractérisée en ce que** la section transversale de la section d'espace (28) s'élargit de manière conique dans la direction d'insertion.

4. Garniture de valve (10) selon l'une quelconque des revendications 1 à 3, **caractérisée en ce qu'**une extrémité libre de la garniture de valve, qui peut être disposée dans le boîtier de valve (60), est recouverte au moins partiellement, en particulier par une paroi arrière.

5. Garniture de valve (10) selon l'une quelconque des revendications 1 à 4, **caractérisée en ce que** l'épaulement annulaire (26) forme une butée pour le corps d'étanchéité.

6. Garniture de valve (10) selon l'une quelconque des revendications 1 à 5, **caractérisée en ce que** la section d'espace conique (28) limite, par une paroi arrière associée (36) située à une distance (i₄) et faisant office d'extrémité libre de la garniture de valve (10), un espace arrière (30) en forme d'espace tubulaire coaxial à son espace tubulaire (20), dans lequel espace arrière est monté de manière axialement coulissante le corps d'étanchéité ou cône d'étanchéité (54).

7. Garniture de valve (10) selon l'une quelconque des revendications 1 à 6, **caractérisée en ce qu'**au moins un passage est prévu dans la paroi de l'espace arrière (30), le bord duquel passage déterminant avec la paroi arrière (36) la longueur axiale (q) d'un point d'appui pour le corps d'étanchéité ou cône d'étanchéité (54).

8. Garniture de valve (10) selon l'une quelconque des revendications 1 à 7, **caractérisée en ce que** le corps d'étanchéité (54) présentant une surface extérieure cylindrique est monté de manière axialement coulissante dans l'espace arrière (30) et, lors d'une introduction partielle dans la direction d'insertion (x) dans la section d'espace conique (28) de la garniture de valve (10), peut être déformé en s'adaptant à sa surface de paroi.

9. Garniture de valve (10) selon l'une quelconque des revendications 1 à 8, **caractérisée en ce que**, dans la position finale du cône d'étanchéité (54), sa surface frontale (54) éloignée de l'arrière s'applique contre l'épaulement annulaire (26).

10. Garniture de valve (10) selon l'une quelconque des revendications 1 à 9, **caractérisée en ce qu'**au niveau de la surface extérieure (42) de la garniture de valve, une bague d'étanchéité (50) en matériau flexible dépassant radialement de cette surface est associée au renflement annulaire (25), disposé à l'extrémité de l'espace tubulaire (20), de la garniture de valve (10).

11. Garniture de valve (10) selon l'une quelconque des revendications 1 à 10, **caractérisée par** une bague d'étanchéité (50), en particulier de section transversale plane, qui est logée dans une rainure annulaire extérieure (46) de la garniture de valve (10).

12. Garniture de valve (10) selon l'une quelconque des revendications 1 à 11, **caractérisée en ce qu'**un renflement annulaire (48) s'étendant approximativement de manière centrale dépasse de la surface de base de la rainure annulaire (46) (figure 2).

13. Garniture de valve (10) selon l'une quelconque des revendications 1 à 12, **caractérisée en ce que** la bague d'étanchéité (50) est plane.

14. Garniture de valve (10) selon l'une quelconque des revendications 1 à 13, **caractérisée en ce qu'**une bague d'étanchéité supplémentaire (52) présente une section transversale approximativement quadrangulaire et la largeur de paroi correspond approximativement à la largeur (f) d'une surface annulaire extérieure (32), servant de surface d'appui, de la garniture de valve (10).

15. Garniture de valve (10) selon l'une quelconque des revendications 1 à 14, **caractérisée en ce qu'**une surface annulaire (32) et une bague extérieure (12) de la garniture de valve (10) forment une limitation d'appui à angle droit pour une bague d'étanchéité supplémentaire (52).

16. Garniture de valve (10) selon l'une quelconque des revendications 1 à 15, **caractérisée en ce qu'**une bague d'étanchéité supplémentaire (52) dépasse radialement d'une bague extérieure (12).

17. Valve (90) pour un pneumatique de véhicule ou un élément similaire, comprenant une paroi de type enveloppe d'un boîtier de valve (60) qui comprend une section de base (68) pour la liaison à un tuyau flexible à air ou un élément de raccordement similaire et duquel dépasse axialement, à l'autre extrémité, une garniture de valve (10) selon l'une quelconque des revendications 1 à 16.

18. Valve (90) selon la revendication 17, **caractérisée en ce qu'**un corps de valve de voiture automobile (60) entoure par sections la garniture de valve (10) et, par un rebord annulaire (67) angulaire ou de type conduit partiel en section transversale d'une bague filetée (66), vient en prise par l'arrière avec la bague extérieure (12) de la garniture de valve (figure 6).

19. Valve (90) selon la revendication 17 ou 18, **caractérisée en ce qu'**un corps de valve de bicyclette (60ₐ) entoure par sections la garniture de valve (10) et, par un rebord annulaire (67) angulaire ou de type conduit partiel en section transversale, vient en prise par l'arrière avec la bague extérieure (12) de la garniture de valve (figure 7).

20. Valve (90) selon l'une quelconque des revendications 17 à 19, **caractérisée en ce qu'**un corps de valve dite Presta (61), dont le bord d'extrémité (65ₐ) s'étend en dessous de la bague d'étanchéité (52) disposée sur la bague extérieure (12) de la garniture de valve (10), entoure par sections la garniture de valve (10) (figure 8).
